(19) Europäisches Patentamt
European Patent Office
Office européen des brevets

(11) EP 0 666 967 B1

(12) **FASCICULE DE BREVET EUROPEEN**

(45) Date de publication et mention
de la délivrance du brevet:
**05.03.1997 Bulletin 1997/10**

(51) Int Cl.$^6$: **F16F 1/32**, F16F 7/08,
F41A 3/88, F41A 25/06,
F41A 25/12

(21) Numéro de dépôt: **93924674.0**

(22) Date de dépôt: **04.11.1993**

(86) Numéro de dépôt international:
**PCT/FR93/01088**

**WO 94/11649 (26.05.1994 Gazette 1994/12)**

(54) **DISPOSITIF AMORTISSEUR POUR SYSTEME MECANIQUE**

DÄMPFER FÜR EIN MECHANISCHES SYSTEM

DAMPER DEVICE FOR MECHANICAL SYSTEM

(84) Etats contractants désignés:
**DE ES FR GB SE**

(30) Priorité: **06.11.1992 FR 9213428**

(43) Date de publication de la demande:
**16.08.1995 Bulletin 1995/33**

(73) Titulaire: **ETIENNE LACROIX - TOUS ARTIFICES
SA
F-31600 Muret (FR)**

(72) Inventeur: **VALEMBOIS,Guy
F-31700 Blagnac (FR)**

(74) Mandataire: **Texier, Christian et al
Cabinet Regimbeau,
26, Avenue Kléber
75116 Paris (FR)**

(56) Documents cités:
**EP-A- 0 345 537        CH-A- 300 379
DE-A- 2 751 992        FR-A- 2 127 224
FR-A- 2 333 165        GB-A- 907 408
GB-A- 1 132 119        US-A- 2 539 275**

- **PATENT ABSTRACTS OF JAPAN vol. 016, no. 193 (P-1349)11 Mai 1992 & JP,A,04 027 897 (TOSHIBA CORP) 30 Janvier 1992**

## Description

La présente invention concerne le domaine des amortisseurs pour système mécanique en mouvement.

La présente invention s'applique en particulier, mais non exclusivement, au domaine des systèmes d'armes munis d'un dispositif d'amortisseur.

On a déjà proposé de nombreuses structures d'amortisseurs.

On a par exemple proposé des amortisseurs à base de ressorts hélicoïdaux ou équivalents dans les documents US-A-4.895.061., US-A-2.363.675, US-A-2.273.878, FR-A-404.988, FR-A-135.971, US-A-1.480.557, US-A-1.483.129, US-A-3.387.538 et US-A-2.790.357.

On a proposé des amortisseurs à base d'écoulement de produits pelliculaires ou équivalents dans les documents US-A-3.105.411, US-A-4.173.130, US 3.417.660, US 3.521.270.

On a proposé des amortisseurs à base de système hydraulique ou pneumatique dans les documents FR-A-2.644.571, FR-A-2.588.370, US-A-4.388.855 et US-A-1.845.218.

On a proposé des amortisseurs à base de nids d'abeille ou équivalents dans les documents FR-A-2.653.870, US-A-4.227.593, US-A-3.130.819, US-A-3.552.525, US-A-3.265.163, US-A-3.082.846 et US-A-3.010.040.

On a proposé des amortisseurs à base de billes creuses déformables dans les documents FR-A-2.653.870, US-A-3.923.292 et US-A-3.637.051.

On a également proposé des amortisseurs à base de systèmes à friction, découpe ou déformation de matière dans les documents FR-A-2.241.726, US-A-3.501.997 et US-A-3.424.448.

On a proposé dans le document GB-A-907 408 un dispositif d'amortissement comprenant deux ressorts hélicoïdaux de diamètres différents dont les spires respectives sont imbriquées les unes dans les autres.

Par ailleurs, on a proposé dans le document FR-A-2 333 165 un dispositif d'amortissement comprenant :

- deux ensembles susceptibles de déplacement relatif guidé, l'un lié à une référence, l'autre mobile par rapport à cette référence,
- des moyens définissant une liaison d'entraînement entre ledit autre ensemble et un système à amortir,
- un patin apte à reposer sur un premier des ensembles, et
- des moyens de commande, formés de biellettes inclinées, intercalées entre le patin et le second ensemble, afin de se relever en cas de choc sur le système à amortir pour exercer sur le patin un effort tendant à appliquer celui-ci contre le premier ensemble, lors de la phase active de la sollicitation du dispositif amortisseur correspondant à un premier sens de déplacement relatif entre les deux ensembles et pour réduire l'effort exercé sur le patin lors d'une phase passive de la sollicitation du dispositif amortisseur correspondant à un second sens de déplacement relatif entre les deux ensembles.

Le dispositif décrit dans ce document FR-A-2 333 165 ne donne pas totalement satisfaction. Il présente en particulier des risques de coincement du patin sur le premier ensemble.

Le but de la présente invention est de perfectionner les systèmes existants.

Un but particulier de la présente invention est de proposer un système amortisseur réversible, c'est-à-dire un système amortisseur qui ne subit pas d'altération irréversible lors de son utilisation et qui peut par conséquent être réutilisé plusieurs fois.

Ce but est atteint selon la présente invention grâce à un dispositif amortisseur du type décrit dans le document FR-A-2 333 165, comprenant :

- deux ensembles susceptibles de déplacement relatif guidé, l'un lié à une référence, l'autre mobile par rapport à cette référence,
- des moyens définissant une liaison d'entrainement entre ledit autre ensemble et un système à amortir,
- un patin apte à reposer sur un premier des ensembles, et
- des moyens de commande comprenant des moyens élastiques intercalés entre le patin et le second ensemble, lesquels moyens de commande sont adaptés pour exercer un effort sur le patin tendant à appliquer celui-ci contre le premier ensemble, lors de la phase active de la sollicitation du dispositif amortisseur correspondant à un premier sens de déplacement relatif entre les deux ensembles et pour réduire l'effort exercé sur le patin lors d'une phase passive de la sollicitation du dispositif amortisseur correspondant à un second sens de déplacement relatif entre les deux ensembles,

caractérisé par le fait que les moyens de commande comprennent des moyens élastiques sous forme de poutres rectilignes au repos, reposant par leurs extrémités, respectivement sur le patin et sur le second ensemble, travaillant au flambage.

Selon une autre caractéristique avantageuse de la présente invention, les moyens élastiques composant les moyens de commande sont chargés lors du rattrapage au moins partiel d'un jeu existant au repos entre le patin et ledit second ensemble

Selon une autre caractéristique avantageuse de la présente invention, il est prévu en outre un limiteur d'effort entre le second ensemble et les moyens de commande.

Selon une autre caractéristique avantageuse de la présente invention, il est prévu en outre des moyens de rappel aptes à ramener l'ensemble mobile en position d'origine, par l'intermédiaire d'une phase passive, après la phase active.

D'autres caractéristiques, buts et avantages de la présente invention apparaîtront à la lecture de la description détaillée qui va suivre et en regard des dessins annexés, donnés à titre d'exemples non limitatifs et sur lesquels:

- la figure 1 représente une vue schématique en coupe axiale longitudinale d'un dispositif amortisseur conforme à un premier mode de réalisation de la présente invention, au repos,
- la figure 2 représente une vue similaire du même dispositif conforme au premier mode de réalisation de la présente invention en phase active de sollicitation.
- la figure 3 représente schématiquement le diagramme pression de contact en fonction du temps obtenu à l'aide d'un tel dispositif amortisseur,
- la figure 4 représente schématiquement le diagramme déplacement, en fonction du temps, obtenu à l'aide de ce dispositif amortisseur,
- la figure 5 représente le diagramme effort en fonction du déplacement obtenu à l'aide de ce dispositif amortisseur,
- la figure 6 représente une vue schématique en coupe longitudinale similaire d'un amcrtisseur conforme à un second mode de réalisation de la présente invention, au repos,
- les figues 7 à 14 représentent respectivement des vues schématiques en coupe longitudinale similaires d'amortisseurs conformes à d'autres variantes de réalisation de la présente invention,
- les figures 15 à 17 représentent un autre mode de réalisation d'un dispositif amortisseur à trois phases successives de son fonctionnement, et
- la figure 18 illustre le diagramme de fonctionnement de ce dernier mode de réalisation.

Comme précedemment indiqué, les amortisseurs conformes à la présente invention comprennent:

- deux ensembles susceptibles de déplacement relatif guidé, l'un liés à une référence, l'autre mobile par rapport à cette référence,
- des moyens définissant une liaison d'entrainement entre ledit autre ensemble et un système à amortir,
- un patin apte à reposer sur un premier ensemble, et
- des moyens de commande élastiques intercalés entre le patin et le second ensemble, lesquels moyens de commande sont adaptés pour exercer un effort sur le patin tendant à appliquer celui-ci contre le premier ensemble, lors d'une phase active de la sollicitation du dispositif amortisseur correspondant à un premier sens de déplacement relatif entre les deux ensembles et pour réduire l'effort exercé sur le patin lors d'une phase passive de la sollicitation du dispositif amortisseur correspondant à un second sens de déplacement relatif entre les deux ensembles.

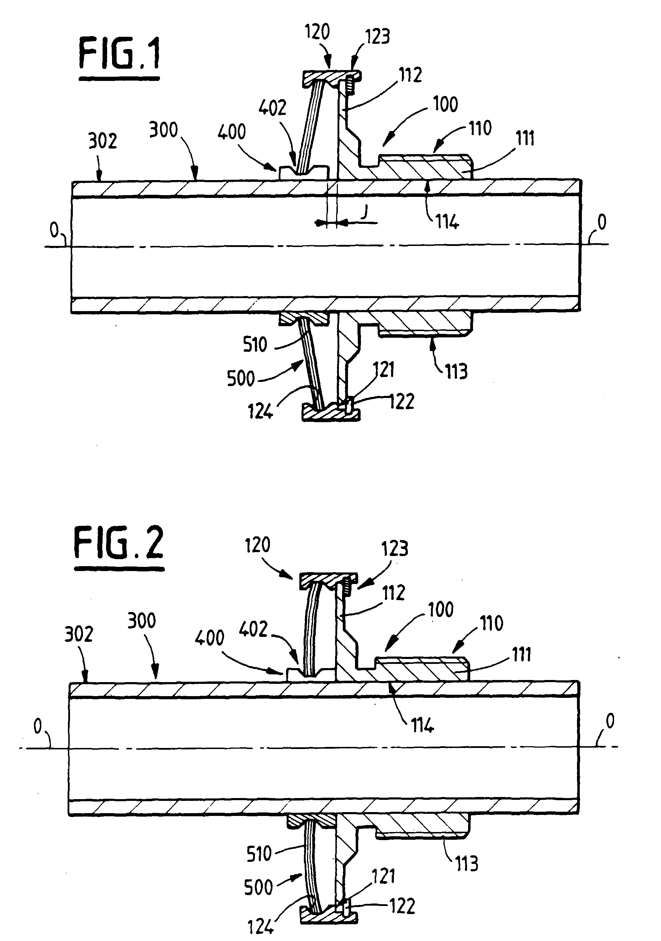

On va dans un premier temps décrire le premier mode de réalisation d'amortisseur conforme à la présente invention illustré sur les figures 1 et 2 annexées.

Le dispositif amortisseur représenté sur la figure 1 annexée comprend deux ensembles 100, 300 susceptibles de déplacement relatif guidé à translation selon un axe O-O, un patin 400 et un moyen de commande 500.

Par la suite, on supposera que l'ensemble 100 constitue une pièce d'appui fixe, tandis que l'ensemble 300 est mobile et conçu pour être relié au système à amortir.

Toutefois, cette disposition ne doit pas être considérée comme limitative. En effet, d'autres dispositions sont possibles, par exemple la disposition inverse comme on le verra par la suite.

C'est-à-dire que la pièce 100 peut être mobile et conçue pour être reliée au support à amortir, tandis que l'ensemble 300 est fixe et sert de pièce d'appui.

Pour l'essentiel, l'ensemble 100 a la forme générale d'une pièce tubulaire centrée sur l'axe O-O.

Plus précisément, l'ensemble 100 comprend une pièce 110 composée d'un fourreau cylindrique 111 centré sur l'axe O-O et d'une bride 112 généralement plane, en forme de couronne perpendiculaire à l'axe O-O.

La pièce 110, et plus précisément le fourreau 111 de celle-ci, peut être fixée sur une référence fixe par tous moyens appropriés, par exemple à l'aide d'un filetage 113 prévu sur la surface extérieure du fourreau 111.

L'ensemble 100 comprend en outre un anneau 120 engagé sur la périphérie extérieure de la bride 112.

Plus précisément, la surface interne- de l'anneau 120 est étagée afin de définir un décrochement 121 qui débouche sur l'une des extrémités axiales de l'anneau 120 et sert de portée d'appui axial à la surface radialement externe de la bride 112.

Pour cela, bien entendu, le diamètre radialement externe du décrochement 121 doit être complémentaire du diamètre extérieur de la bride 112.

Cette bride 112, et par conséquent la pièce 110, est immobilisée sur l'anneau 120 grâce à un circlips 122 immobilisé dans une gorge 123 formée sur la surface interne de l'anneau 120.

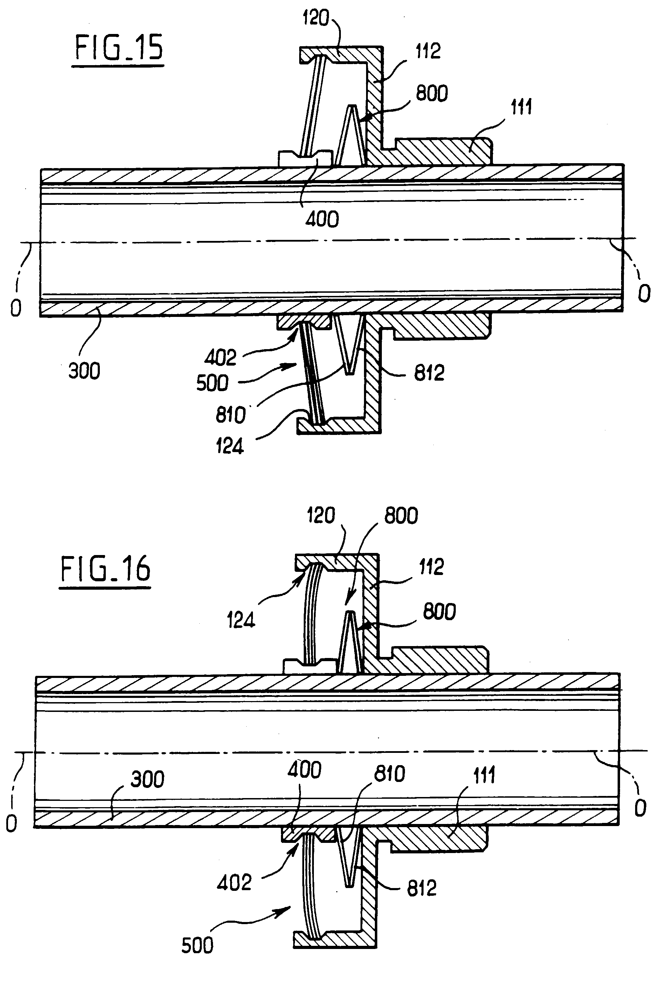

Bien entendu, en pratique, la pièce 110 et l'anneau 120 pourraient être réunis sous forme d'une pièce unique, comme on le verra par exemple sur les figures 15 à 17.

Par ailleurs, l'anneau 120 est muni sur sa surface interne d'une gorge annulaire 124 dont la fonction sera précisée par la suite.

L'ensemble 300 est formé, selon le mode de réalisation schématique donné sur la figure 1, d'un tube cylindrique centré sur l'axe O-O. Le tube 300 représenté sur la figure 1 présente un diamètre extérieur constant sur toute sa longueur.

L'ensemble 300 peut être guidé à translation par rapport à l'ensemble 100, selon l'axe O-O, par tous moyens connus appropriés.

De préférence, le tube composant l'ensemble 300 est guidé à translation selon l'axe O-O par le fourreau 111 lui-même, à l'intérieur de celui-ci.

A cet effet, le diamètre de la surface extérieure 302 de l'ensemble 300 est complémentaire du diamètre de la surface interne 114 du fourreau 111.

L'ensemble 300, tout comme l'ensemble 100, peut être formé à base de tout matériau approprié, par exemple à base de métal ou de matériau composite.

Le patin 400 est formé d'une bague centrée sur l'axe O-O et possédant au moins une fente radiale.

Le patin 400 est engagé sur la surface externe 302 de l'ensemble 300. Le patin 400 peut être formé à base de tout matériau de friction approprié.

En effet, tous les couples de matériaux présentant un grand coefficient de frottement peuvent être utilisés dans le cadre de la présente invention.

A titre d'exemple, on peut citer les couples suivants:

- l'acier et l'alumine en masse ou en dépôt,
- l'acier et les matériaux composites de friction,
- le carbone sur lui-même ou sur l'acier,
- le graphite sur lui-même ou sur l'acier,
- l'acier sur les matériaux de friction frittés,
- l'acier sur la fonte,
- tout autre couple de matériaux présentant un intérêt pour la friction, en particulier les céramiques ou les matériaux organiques.

Le patin 400 possède avantageusement une gorge annulaire 402 dans sa surface radialement externe.

Selon le mode de réalisation représenté sur la figure 1, le moyen de commande 500 comprend des moyens élastiques composés d'une pièce de flambage 510. Plus précisément, cet ensemble de flambage est formé d'un empilement de rondelles élastiques planes au repos, possédant des fentes radiales débouchant alternativement sur la périphérie interne et sur la périphérie externe pour constituer un ensemble de poutres radiales sollicitées en flambage. Ces rondelles sont réalisées avantageusement en acier.

Les rondelles 510 montées et non sollicitées prennent une forme géométrique globalement conique. Elles reposent par leur périphérie extérieure dans la gorge 124 formée dans l'anneau 120, et par leur périphérie intérieure dans la gorge 402 du patin. C'est le diamètre de cette gorge, légèrement supérieur au diamètre intérieur des rondelles 510 dans leur état non déformé qui impose aux rondelles de passer d'une forme initialement plane à une forme globalement conique lorsqu'elles sont montées. Le sommet du cône géométrique sur lequel s'appuient les rondelles 501 est dirigé dans la direction opposée à la direction d'un choc dans le but de provoquer le serrage du patin sur la tige en cas de choc et provoquer le desserrage du patin sur la tige en cas de remise en position initiale (retour après le choc).

Bien entendu, le cas échéant, on peut prévoir d'utiliser une seule rondelle élastique pour constituer la pièce de flambage 510.

Le système est de préférence démontable pour permettre de changer les rondelles élastiques 510 en cas de déficience de celles-ci.

La géométrie axiale du fourreau 111 et du patin 400 doit être telle qu'il existe un jeu axial référencé J sur la figure 1, au repos, entre le patin 400 et la pièce 100.

Le fonctionnement du système qui vient d'être décrit est essentiellement le suivant.

Lorsque l'ensemble 300 relié à la pièce à amortir se déplace vers la droite soit vers l'ensemble 100, selon la représentation donnée sur la figure 1, il entraîne, par friction, le patin 400 en rapprochement de l'ensemble 100 maintenu fixe.

Ce déplacement du patin 400 entraine un flambage des poutres formées par la pièce 510, comme représenté sur la figure 2. Ce flambage de la pièce 510 tend à resserrer la bague fendue composant le patin 400 sur la surface extérieure 302 de l'ensemble 300.

En d'autres termes, le flambage de la pièce 510 génère un effort exercé par le patin 400 sur l'ensemble 300.

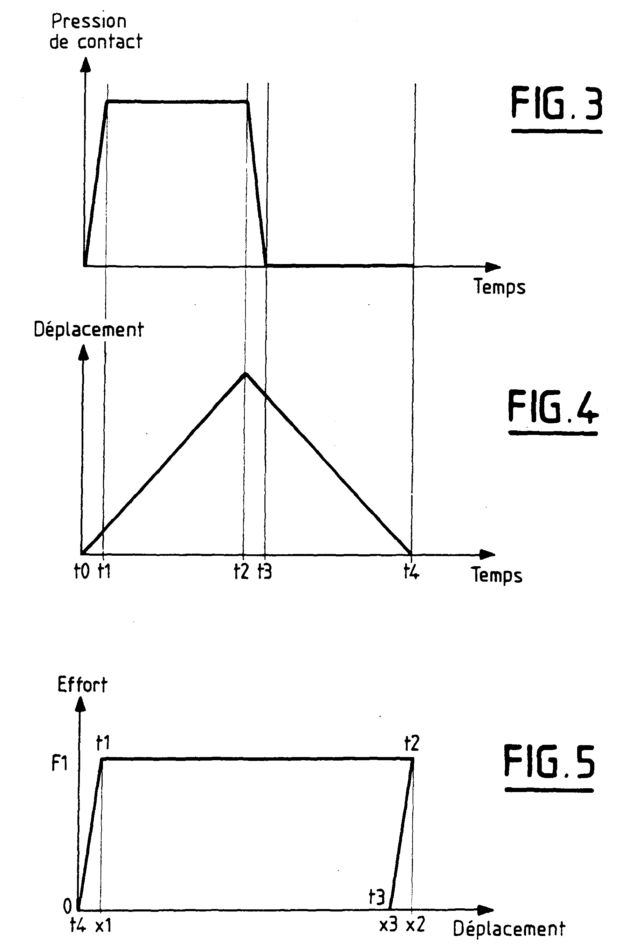

Comme représenté sur la figure 3, cet effort croît progressivement entre les instants $t_0$ et $t_1$, dans une phase de chargement, jusqu'à venue en butée du patin 400 sur la pièce 100.

Tant que l'ensemble 300 est entrainé à déplacement, soit entre les instants $t_1$ à $t_2$ représentés sur les figures 3 à 5, correspondant à une phase de friction, le patin 400 exerce une pression de contact constante sur l'ensemble 300.

Le patin 400 génère ainsi un effort de friction sur la surface externe 302 du tube 300 qui tend à freiner le déplacement de celui-ci et donc à amortir l'effort exercé sur cet ensemble 300.

A la fin du mouvement de l'ensemble 300, soit entre les instants $t_2$ à $t_3$ représentés sur les figures 3 à 5, correspondant à une phase de déchargement, la pression de contact du patin 400 sur l'ensemble 300 décroît progressivement.

Bien entendu, on comprendra que le système amortisseur précédemment décrit est réversible, c'est-à-dire que lors du déplacement de l'ensemble 300 vers la gauche, selon la représentation donnée sur la figure 1 et sur la figure 2, les différentes pièces précitées reprennent leurs positions d'origine telles que représentées sur la figure 1.

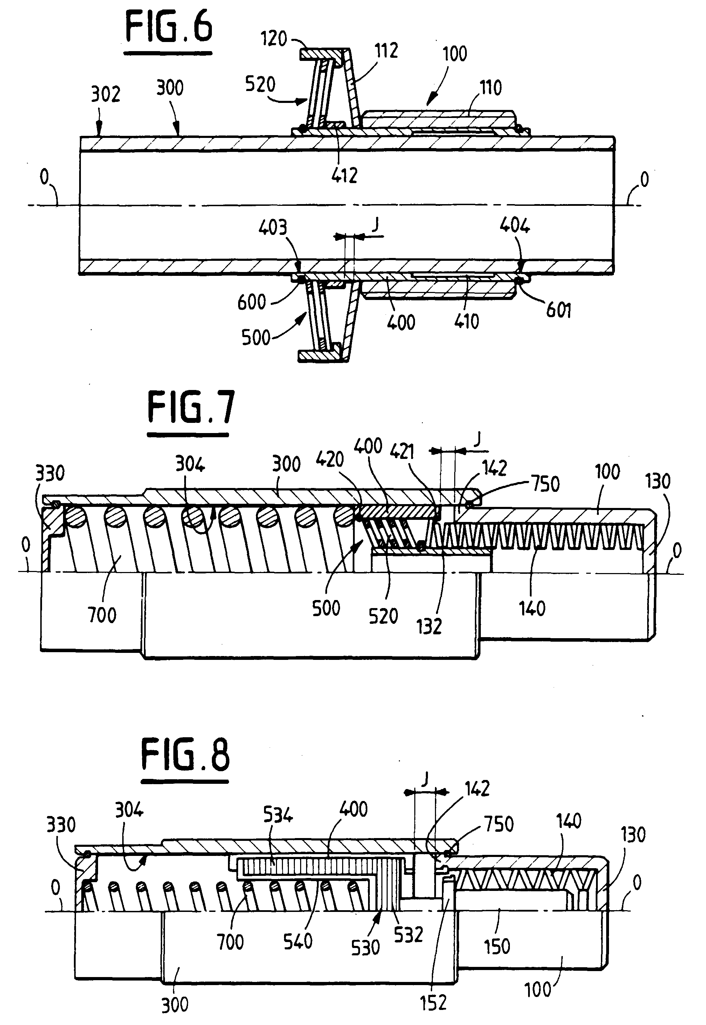

Cette phase de retour, ou de réarmement, est illustrée entre les instants $t_3$ et $t_4$ sur les figures 4 et 5.

Cette phase de retour, ou de réarmement peut être obtenue par actionnement manuel, ou en automatique, grâce par exemple à un ressort de rappel sollicitant l'ensemble 300.

Pendant les phases de chargement et de déchargement, il y a à la fois accumulation d'énergie élastique et d'énergie dissipée.

Comme on l'a indiqué précédemment, la figure 3 représente un diagramme pression de contact en fonction du temps, la figure 4 représente un diagramme déplacement en fonction du temps et la figure 5 représente un diagramme effort en fonction du déplacement.

Selon la représentation donnée sur la figure 2, les rondelles 510 flambent dans le sens d'une concavité dirigée vers l'ensemble 100.

Toutefois, un flambage dans le sens inverse, c'est-à-dire convexité dirigée vers l'ensemble 100, peut être retenu.

Eventuellement, on peut prévoir des doigts de sollicitation sur la surface de la bride 112 adjacente aux rondelles 510 afin d'imposer un flambage en sens inverse des rondelles 510 (convexité vers l'ensemble 100).

On notera que les rondelles 510 jouent à la fois le rôle d'amplificateur d'effort transformant l'effort axial dû au déplacement de l'ensemble 300 en un effort radial sur le patin 400 et simultanément le rôle de limiteur d'effort.

Les essais effectués par la Demanderesse ont montré que ce système amortisseur était utilisable dans une très large plage de vitesse, pouvant atteindre des vitesses supérieures à 100m/s.

En effet, l'efficacité de l'amortisseur dépend peu de la vitesse de sollicitation car le coefficient de frottement évolue peu avec la vitesse de glissement. Ceci rend également l'amortisseur à friction particulièrement efficace pour les mouvements présentant de grandes variations de vitesse.

Par ailleurs, ce système amortisseur permet d'amortir des efforts tombant dans une très large plage, par exemple de l'ordre de 10N à quelques 100kN, selon le moyen 500 utilisé.

Le profil du diagramme d'amortissement peut faire l'objet également de nombreuses variantes en donnant par exemple à la surface externe 302 de l'ensemble 300 et/ou à la surface interne 114 du fourreau 110, et/ou au patin 400 une section variable afin de moduler en conséquence l'effort de friction généré, ou encore en contrôlant l'état de surface de cet ensemble, par exemple en prévoyant un coefficient de frottement variable sur la longueur des surfaces de friction mises en jeu.

Le système amortisseur précédemment décrit peut être utilisé dans une large plage de températures, typiquement de température de cryogène à plusieurs centaines de °C.

Enfin, le système amortisseur précédemment décrit autorise des déplacements relatifs de grande amplitude entre les ensembles 100 et 300, typiquement de l'ordre de quelques millimètres à quelques mètres.

En variante, le patin 400, le moyen de commande 500 et l'ensemble 100 peuvent être placés à l'intérieur du tube 300, comme on le verra par la suite, et non plus sur l'extérieur de celui-ci.

On va maintenant décrire le second mode de réalisation de la présente invention représenté sur la figure 6 annexée.

On retrouve sur cette figure 6 des ensembles 100, 300 susceptibles de translation relative, un patin 400 et un moyen de commande 500.

Toutefois, selon le mode de réalisation représenté sur la figure 6, le patin 400 est formé d'un tube de grande longueur, qui reçoit sur sa surface externe l'ensemble 100 et le moyen de commande 500.

Plus précisément, le tube composant le patin 400 possède deux gorges 403, 404, respectivement au voisinage de ces extrémités axiales, lesquelles gorges reçoivent des joncs élastiques 600, 601 servant respectivement d'appui axial au fourreau 110 et au moyen de commande 500.

Par ailleurs, selon le mode de réalisation représenté sur la figure 6, le fourreau 110, la bride 112 et l'anneau 120 sont formés de pièces séparées, axialement empilées.

Afin de limiter et confiner la surface de friction active du patin 400, le tube composant celui-ci est de préférence muni d'une cavité interne annulaire 410.

Une bague 412 est engagée sur le patin 400 et repose axialement contre la périphérie radialement interne du moyen 500, de sorte que le jeu de déplacement autorisé entre le patin 400 et l'ensemble 100 soit défini par le jeu axial J existant au repos entre cette bague 112 et la base de la bride 112.

Plus précisément encore, selon le mode de réalisaiton représenté sur la figure 6, le moyen de commande 500 comprend au moins une rondelle élastique 520 en étoile, de préférence un empilement de telles rondelles élastiques en étoile 520.

Sur la figure 6, on a ainsi représenté schématiquement trois rondelles élastiques en étoile 520 empilées axialement et intercalées entre la surface externe du patin 400 et la surface interne de l'anneau 120.

Ces rondelles dites en étoile 520 sont formées d'anneaux à cônes plats (rondelles coniques type Belleville) qui présentent des fentes radiales débouchant alternativement sur leur périphérie extérieure et intérieure.

Ces rondelles 520 sont formées typiquement en acier à ressort spécial trempé.

Lorsqu'un effort axial est exercé sur la périphérie intérieure ou la périphérie extérieure de ces rondelles 520, alors que l'autre périphérie, extérieure ou intérieure, repose sur un appui axial, ces rondelles 520 en étoile subissent une augmentation de leur diamètre extérieur et une diminution de leur diamètre intérieur.

Les forces axiales ainsi exercées se transforment par conséquent en force radiale 5 à 6 fois plus importantes qui agissent de façon régulière sur le patin 400.

Plus précisément encore, ces rondelles en étoile 520 présentent typiquement un cône de demi-angle au sommet de l'ordre de 80°, par exemple égal à 81°.

Ces rondelles 520 forment un multiplicateur d'effort mécanique dont le coefficient de multiplication k est égal à 1/tg (90° - le demi-angle au sommet d'ouverture des rondelles).

Pour des rondelles 520 présentant un cône de demi-angle au sommet égal à 81°, le coefficient multiplicateur des forces est égal à k = 1/tg 9°, soit k = 6,31.

La bride 112 représentée sur la figure 6 et intercalée entre l'anneau 120 et le fourreau 110 peut être formée d'une pièce rigide.

Toutefois, en variante, cette bride 112 peut être formée d'un limiteur d'effort, constitué par exemple d'une rondelle de type Belleville.

Bien entendu, bien que cela ne soit pas représenté sur la figure 6, l'ensemble 300 peut être associé à des moyens de rappel automatique, tels que par exemple un ressort de rappel.

On a représenté sur la figure 7 une autre variante de réalisation d'un dispositif amortisseur conforme à la présente invention dans lequel on retrouve deux ensembles 100, 300 constitués d'éléments tubulaires susceptibles de translation relative selon un axe O-O central.

Chacun de ces éléments tubulaires 100, 300 est pourvu à une extrémité axiale d'une cloison 130, 330, en forme de disque transversal à l'axe O-O.

Plus précisément, l'ensemble 100 est placé à l'intérieur de l'ensemble 300, de sorte que les deux chambres définies respectivement par les ensembles 100 et 300 soient placées en regard.

De même, le patin 400 et les moyens de commande 500 associés sont placés à l'intérieur de l'ensemble 300.

Plus précisément encore, en l'espèce, la bague fendue 400 repose contre la surface interne 304 de l'ensemble 300.

Les moyens de commande 500 sont intercalés entre la surface interne de la bague fendue 400 et la surface externe d'un fût 132 lié à l'ensemble 100.

En l'espèce, les moyens de commande 500 sont formés d'un empilement de rondelles étoile 520 du type décrit précédemment en regard de la figure 6.

Les rondelles 520 sont confinées sur la surface interne de la bague 400 grâce à deux joncs élastiques 420, 421 en prise dans des gorges formées sur la surface interne de la bague 400.

Par ailleurs, selon le mode de réalisation représenté sur la figure 7, les moyens de commande 500 formés par les rondelles élastiques 520 sont en appui axial contre un empilement de rondelles Belleville 140 servant de limiteur d'effort logées dans l'ensemble 100 sur la périphérie du fût 132.

On notera que le cas échéant les rondelles Belleville 140 formant un limiteur d'effort peuvent être supprimées.

Dans ce cas, les rondelles élastiques 520 sont en appui axial contre un piston rigide solidaire de l'ensemble 100.

Sur la figure 7, on a représenté un ressort de rappel 700 intercalé entre l'ensemble 300, plus précisément la cloison transversale 330 de celui-ci, et le patin 400.

En variante, le ressort de rappel 700 pourrait être intercalé entre la cloison 330 de l'ensemble 300 et l'ensemble 100.

On notera que là encore il est prévu un jeu axial J au repos entre le patin 400 et l'ensemble 100.

Lors d'un déplacement relatif à translation selon l'axe O-O entre les deux ensembles 100 et 300, dans le sens d'une sollicitation du dispositif amortisseur, le patin 400 est entraîné en rapprochement de l'ensemble 100 par friction sur la surface interne de l'ensemble 300.

Ce déplacement tend à réduire le jeu J formé entre le patin 400 et l'ensemble 100, et par conséquent à charger les rondelles élastiques 520 pour accroître l'effort de friction entre le patin 400 et la surface interne de l'ensemble 300.

Lors d'un déplacement en sens inverse entre les ensembles 100 et 300, sous l'effet du ressort de rappel 700, les rondelles élastiques 500 sont déchargées et par conséquent l'effort de friction entre le patin 400 et la surface interne de l'ensemble 300 est réduit.

De préférence, il est prévu des moyens aptes à interdire la séparation entre les ensembles 100 et 300. Ces moyens de bridage peuvent être formés de nombreuses variantes de réalisation.

En l'espèce, selon le mode de réalisation représenté sur la figure 7, ils sont formés d'un jonc 750 en prise dans une gorge formée sur la surface interne de l'ensemble 300, au niveau du contour d'ouverture de celui-ci et servant d'appui à une nervure annulaire 142, prévue sur la périphérie extérieure de l'ensemble 100, au niveau du contour d'ouverture de celui-ci.

On retrouve sur la figure 8 un dispositif amortisseur comprenant deux ensembles 100, 300 susceptibles de translation relative selon un axe central O-O, chacun des ensembles 100, 300 étant pourvu d'une cloison transversale 130, 330.

On retrouve également sur la figure 8 annexée un patin 400 reposant sur la surface interne 304 de l'ensemble 300, ainsi qu'un ressort de rappel 700.

Toutefois, selon le mode de réalisation représenté sur la figure 8, les moyens de commande 500 comprennent essentiellement un corps déformable en élastomère 530, intercalé entre l'ensemble 100 et le patin 400.

Ce corps en élastomère 530 présente de préférence une forme de révolution autour de l'axe O-O de section droite en U.

L'âme 532 du corps 530 est formée d'une paroi en forme de disque s'étendant transversalement à l'axe O-O, en regard de l'ensemble 100.

Les ailes 534 de cette section droite en U forment une jupe cylindrique de révolution autour de l'axe O-O placé sur l'intérieur du patin 400.

De préférence, ce bloc en élastomère 530 est placé sur l'extérieur d'un réservoir déformable 540. Ce réservoir placé à l'intérieur du corps 530 a également une forme générale de révolution présentant une section droite en U.

Plus précisément encore, l'âme 532 du bloc en élastomère 530 repose contre un piston 150 logé dans l'élément 100. Le piston 150 est formé d'un élément rigide muni d'une collerette annulaire 152.

De façon comparable au mode de réalisation représenté sur la figure 7, un limiteur d'effort formé par un empilement axial de plusieurs rondelles élastiques de type Belleville 140 est intercalé entre la paroi discale 130 de l'ensemble 100 et ladite collerette 152.

En variante, cependant, les rondelles de type Belleville 140 formant un limiteur d'effort pourraient être supprimées et le piston rigide pourrait reposer directement contre la paroi 130, ou être fixé à celle-ci.

La jupe 534 du bloc en élastomère 530 repose contre la surface interne du patin 400.

La mise en pression du bloc en élastomère 530 et du patin 400 est obtenu sous l'effet de la sollicitation du piston 150 lors du rapprochement relatif des ensembles 100 et 300.

La multiplication d'action mécanique obtenue est liée au rapport des surfaces entre la surface de l'âme 532 reposant sur le piston 150 et la surface de la jupe 534 reposant contre le patin 400.

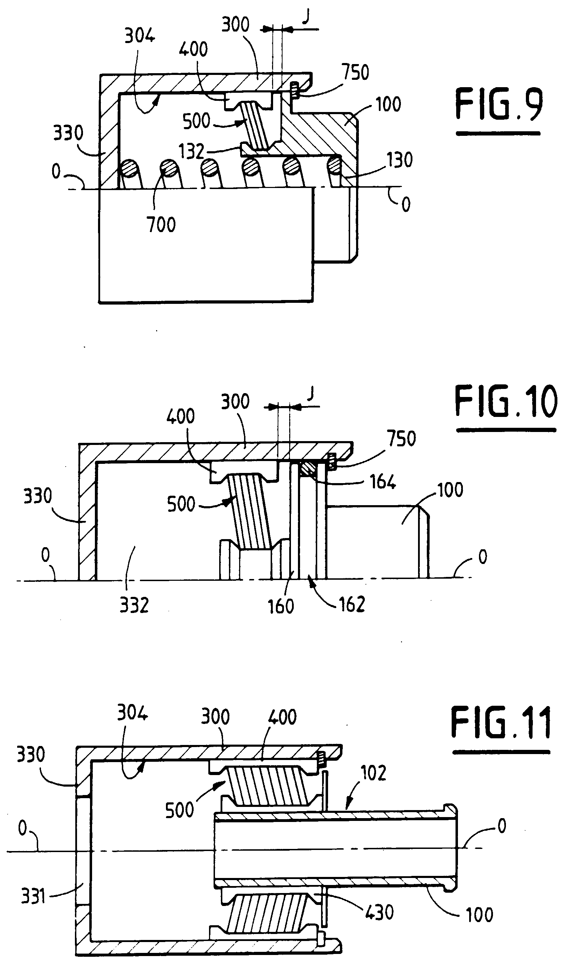

On a représenté sur la figure 9 une variante de réalisation qui se distingue essentiellement du mode de réalisation représenté sur la figure 7, par la suppression du limiteur d'effort 140.

On retrouve en effet sur la figure 9 deux ensembles 100, 300 susceptibles de translation relative selon l'axe central O-O, un patin 400 reposant sur la surface interne 304 de l'ensemble 300, des moyens de commande 500 intercalés entre la surface interne du patin 400, plus précisément une gorge formée sur la périphérie interne de celui-ci, et une jupe 132 liée à l'ensemble 100, ainsi qu'un ressort de rappel 700 intercalé entre la paroi transversale 330 de l'ensemble 300 et la paroi transversale 130 de l'ensemble 100.

Les moyens de commande 500 représentés sur la figure 9 peuvent être formés de rondelles susceptibles de flamber, comme indiqué précédemment.

On notera que, selon le mode de réalisation représenté sur la figure 9, les moyens de rappel 700 sont formés d'un ressort hélicoïdal.

La variante de réalisation représentée sur la figure 10 se distingue de celle représentée sur la figure 9 par le fait que les moyens de rappel 700 ne sont plus formés d'un ressort spiral intercalé entre les deux ensembles 100, 300, mais par la compression d'un volume d'air.

Plus précisémment, selon le mode de réalisation représenté sur la figure 10 l'ensemble 300 et sa cloison transversale 330 définissent une chambre interne borgne 332 dont le contour d'ouverture est obturé par l'ensemble 100 formant piston.

A cette fin, l'ensemble 100 possède sur sa surface externe une collerette 160, munie d'une gorge annulaire 162 qui reçoit un joint torique 164.

On comprend que le joint torique 164 assure l'étanchéité entre les deux ensembles 100 et 300, de sorte que le volume d'air contenu dans la chambre 332 soit comprimé lors du rapprochement des deux ensembles par translation relative selon l'axe O-O, et l'air ainsi comprimé sollicite les deux ensembles 100, 300 vers leur position d'origine, dès que l'effort exercé sur l'ensemble mobile est supprimé.

On a représenté sur la figure 11 annexée une variante de réalisation de structure télescopique permettant d'augmenter la course relative entre les deux ensembles 100 et 300.

On retrouve sur la figure 11 les deux ensembles 100, 300 formés de structures tubulaires susceptibles de translation relative selon l'axe central O-O.

Toutefois, selon ce mode de réalisation, il est prévu deux patins annulaires et concentriques 400, 430 qui reposent l'un contre la surface interne 304 de l'ensemble 300, l'autre contre la surface externe 102 de l'ensemble 100.

Les moyens de commande 500 sont intercalés entre les deux bague 400, 430. Ces moyens de commande 500 comprennent de préférence des moyens élastiques, tels que des rondelles en étoile, ou des rondelles susceptibles de flamber, comme indiqué précédemment.

La paroi transversale 330 de l'ensemble 300 doit être munie d'un passage 331 permettant le coulissement de l'ensemble central 100.

Il est généralement difficile d'obtenir deux efforts de friction rigoureusement identiques entre respectivement chacun des patins 400, 430 et les ensembles 300 et 100, compte tenu des coefficients de friction généralement non rigoureusement identiques, et surtout des différences de surfaces mises en jeu.

Le mode de réalisation représenté sur la figure 11 conduit donc à une réponse effort en fonction du déplacement sous forme de deux paliers successifs d'amplitudes respectivement constantes: un premier palier correspondant à l'effort de friction le plus faible suivi d'un second palier d'effort supérieur.

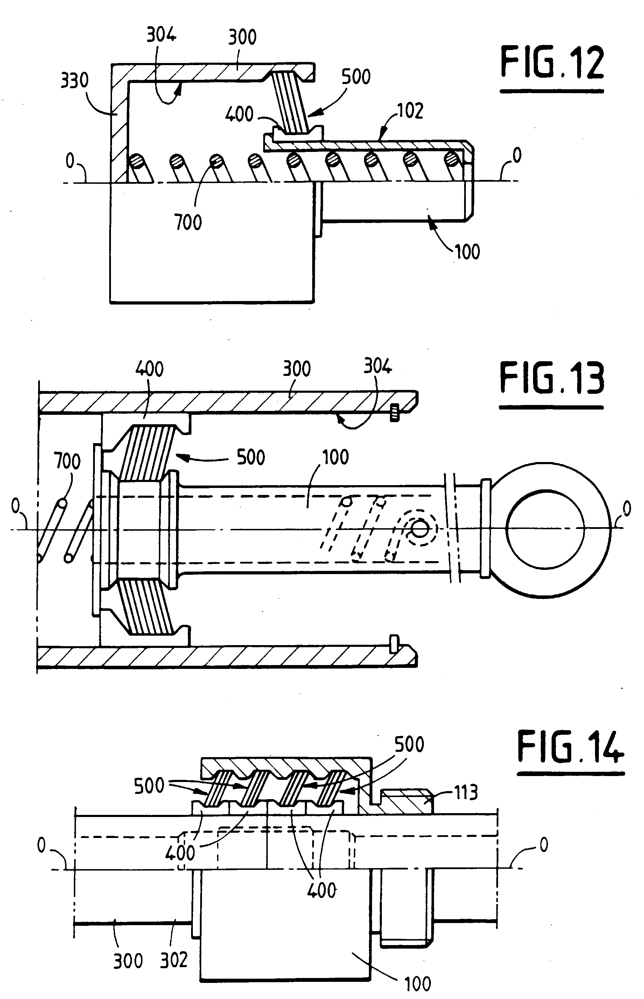

Le mode de réalisation représenté sur la figure 12 se distingue du mode de réalisation représenté sur la figure 9 par le fait que le patin 400 repose sur la surface externe 102 de l'élément central 100, et non plus sur la surface interne 304 de l'ensemble 300.

Dans ce cas par conséquent, les moyens de commande 500 'formés de préférence de rondelles élastiques en étoile ou de rondelles susceptibles de flamber sont intercalés entre l'ensemble 300 et le patin 400, et non plus entre l'ensemble 100 et le patin 400.

Le mode de réalisation représenté sur la figure 13 correspond sensiblement au mode de réalisation représenté sur la figure 9.

On retrouve en effet sur la figure 13 deux ensembles tubulaires 100, 300 susceptibles de translation relative selon un axe central O-O, un patin 400 reposant sur la surface interne 304 de l'ensemble 300 et des moyens de commande 500 intercalés entre l'ensemble 100 et le patin 400, lesquels moyens de commande 500 sont formés avantageusement de rondelles élastiques, telles que des rondelles en étoile, ou encore des rondelles susceptibles de flamber.

Toutefois, le mode de réalisation représenté sur la figure 13 illustre la possibilité de travailler en traction, et non plus en compression, tant au niveau de l'effort exercé sur l'un des ensembles, par exemple sur l'ensemble 100 selon le mode de réalisation particulier de la figure 13, qu'au niveau du ressort de rappel 700.

Bien entendu, le travail en traction schématisé sur la figure 13 peut également s'appliquer à une variante de réalisation selon laquelle le patin 400 repose sur l'ensemble 100 et non pas sur l'ensemble 300, voir le cas échéant à une variante du type représenté sur la figure 11 comprenant deux patins 400 et 430.

Le mode de réalisation représenté sur la figure 14 comprend une pluralité de patins 400 empilés axialement.

Plus précisément, selon le mode de réalisation particulier représenté sur la figure 14, il est ainsi prévu quatre patins 400 juxtaposés axialement.

On retrouve par ailleurs, de façon comparable à la figure 1, deux ensembles 100, 300 susceptibles de translation relative selon l'axe central O-O.

Par ailleurs, chaque patin 400 est associé à des moyens de commande respectifs formés de préférence de rondelles élastiques, telles que des rondelles en étoile, ou encore des rondelles susceptibles de flamber, comme indiqué précédemment.

Plus précisément encore, ces moyens de commande 500 sont, selon le mode de réalisation représenté sur la figure 14, intercalés respectivement entre chacun des patins 400 et une gorge formée dans la surface interne de l'ensemble 100.

L'intérêt d'utiliser une pluralité de patins 400, ainsi juxtaposés axialement selon l'axe O-O, est d'obtenir un moyennage de l'effort de friction résultant.

Cette disposition s'avère particulièrement avantageuse dans des dispositifs comprenant un ensemble , tel que l'ensemble 300 selon la figure 14, formé par assemblage axial de différentes pièces.

Par ailleurs, l'utilisation de différents patins 400 permet de faciliter le passage de la discontinuité formée entre ces pièces, tout en garantissant un effort d'amortissement pratiquement constant.

On va maintenant décrire la variante de réalisation représentée sur les figures 15 à 17.

On retrouve sur la figure 15, de façon comparable à la figure 1 :

- un premier ensemble 100 formé d'un corps comprenant un fourreau cylindrique 111, une bride 112 et un anneau 120,
- un second ensemble 300, formé d'une tige guidée en translation selon l'axe O-O, dans le fourreau 111,
- un patin 400, formée d'une douille de friction fendue, placée sur la tige 300 et susceptible de frotter sur celle-ci,
- au moins une rondelle mince fendue 500, de préférence plusieurs de telles rondelles 500 empilées, dont la périphérie extérieure repose dans une gorge 124 de l'anneau 120, tandis que la périphérie intérieure des mêmes rondelles 500 repose dans une gorge 402 de la douille de friction, de sorte que les rondelles 500 sollicitent la douille 400 sur la tige 300. Ces rondelles 500 sont conformes à celles décrites précédemment en regard de la figure 1. Elles constituent une multitude de poutres radiales susceptibles de flamber.

Cependant, il faut noter que, selon la figure 15, il est prévu en outre, entre la douille de friction 400 et la bride 112 du premier ensemble 100, un appui élastique 800.

Cet appui élastique 800 peut faire l'objet de nombreuses variantes. Il s'agit avantageusement de deux rondelles de type Belleville 810, 812 montées tête-bêche, concavité en regard et en appui mutuel par leur périphérie extérieure.

On notera la présence d'un léger jeu axial J, au repos, entre l'appui élastique 800 et la douille de friction 400 ou la bride 112 .

L'appui axial 800 est adapté de préférence pour générer un effort résistant linéaire en fonction de sa déformation ou contrainte axiale.

Le fonctionnement du dispositif représenté sur la figure 15 est le suivant.

Lorsque l'appareil est au repos, les rondelles 500 sont tronconiques. Par conséquent, les poutres de flambage correspondantes sont rectilignes, dans une position dite d'attente. L'appui élastique 800 n'est pas sollicité.

La douille de friction 400 est en appui sur la tige 300 grâce à l'élasticité propre des rondelles 500.

Lors d'un choc, l'arc-boutement du mécanisme permet l'entraînement de la douille de friction 400 avec la tige 300. Les rondelles 500 sont alors sollicitées en flambage comme illustré sur la figure 16.

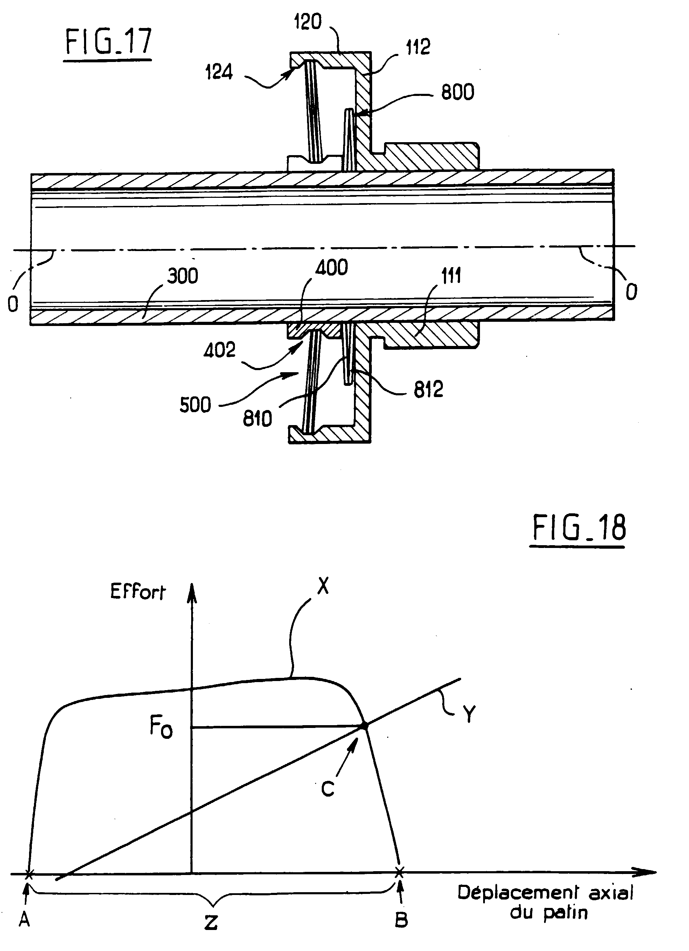

Le jeu axial J et la déformation autorisée de l'appui axial 800 sont adaptés pour permettre la déformation des rondelles 500 vers leur deuxième état stable d'équilibre, c'est à dire un basculement de la concavité des rondelles (dans le sens de déplacement de la tige 300 au repos - voir figure 15 - et dans le sens opposé après chargement - voir figure 17 - ).

Le déplacement relatif de la douille 400 par rapport au corps 100 se termine lorsque, après avoir subi une déformation de flambage, les poutres 500 prennent une position rectiligne et qu'elles sont chargées par l'appui élastique 800, comme on le voit sur la figure 17.

Comme on le voit sur la figure 18, le système est adapté de sorte que la courbe de l'effort résistant de l'appui élastique 800 coupe la courbe de l'effort de friction du patin sur la tige, au niveau du front descendant de cette courbe.

Lors d'un déplacement relatif dans le sens actif de sollicitation, l'effort de friction du au patin 400 s'oppose à l'action de l'appui élastique 800.

En cas de surintensité de l'effort de friction, l'effondrement de l'appui élastique 800 provoque un relachement des rondelles 500.

Le glissement se produit donc avec un effort de friction parfaitement contrôlé par l'appui élastique 800.

Lorsque le mécanisme n'est plus sollicité, la géométrie des rondelles 500 et de l'appui élastique 800, ainsi que le jeu J renvoient les rondelles 500 dans leur premier état d'équilibre stable comme représenté sur la figure 15.

Pour résumer, la déformation au début du choc pour passer de l'état d'attente (figure 15) à l'état de friction contrôlée (figure 17) se fait en passant par déformation de flambage forcée, d'une position d'équilibre initiale des rondelles 500 favorisant l'arcboutement du système vers une seconde position d'équilibre des rondelles 500 favorisant leur relachement, relachement par ailleurs contrôlé par l'appui élastique 800.

On démontre en effet que l'action tangentielle de friction, pendant le glissement relatif de la tige 300 dans la douille 400 peut s'écrire :

$$T = Fof/(f + tg\ \alpha)$$

avec :

f = cofficient de frottement de la douille 400 sur la tige 300,

$\alpha$ = angle d'inclinaison des lamelles de flambage 500, par rapport à une normale à l'axe O-O, dans la position de la figure 17, et

Fo = effort axial résistant produit par l'appui élastique 800.

On peut aussi montrer facilement qu'une variation df/f du coefficient de frottement du couple de matériau entraîne une variation de la réponse de l'amortisseur dT/T avec

$$dT/T=[tg\alpha.df\ ]\ /\ [\ (f + tg\alpha)\ .\ f\ ]$$

Le mode de réalisation représenté sur les figures 15 à 17 offre en particulier les avantages suivants :

- il permet de limiter très sensiblement la fluctuation de la réponse en effort des amortisseurs à friction,
- il permet de régler le mécanisme par contrôle de la réponse de l'appui élastique Fo,
- il permet de modifier la réponse de l'amortisseur à friction sans modifier le nombre de rondelles 500 du dispositif.

En variante, les rondelles Belleville 800 peuvent être remplacées par tout moyen équivalent.

Bien entendu, la présente invention n'est pas limitée aux modes de réalisation particuliers qui viennent d'être décrits, mais s'étend à toute variante conforme à son esprit.

Par ailleurs, le système amortisseur qui vient d'être décrit peut faire l'objet de nombreuses applications.

En particulier, ce système amortisseur peut être utilisé dans un système d'arme, sans que toutefois cette application puisse être considérée comme limitative.

Dans ce cas particulier, la référence fixe peut être formée d'une épaulière, ou de poignées pour un tir à l'épaule, ou encore d'un affût, tandis que l'élément mobile est formé d'un tube d'arme guidé à coulissement par rapport à la référence fixe.

Selon les diverses variantes de réalisation précédemment décrites, les deux ensembles 100, 300 sont susceptibles de translation relative, et l'effort exercé sur l'un mobile des ensembles peut être soit du type compression, soit du type traction.

Bien entendu, l'homme de l'art adaptera aisément la structure générale de l'amortisseur conforme à la présente invention à des systèmes d'amortisseurs comprenant deux ensembles susceptibles de rotation.

Le cas échéant, on peut prévoir des moyens de mise en précontrainte qui par rattrapage au moins partiel du jeu J existant entre le patin 400 et le second ensemble, préchargent les moyens élastiques qui agissent sur le patin 400 avant tout déplacement relatif entre les deux ensembles. On évite ainsi lors de l'utilisation de l'amortisseur, une phase transitoire au cours de laquelle l'ensemble mobile peut prendre de la vitesse.

La Demanderesse a par ailleurs constaté que si les surfaces de friction sont souillées en cours d'utilisation par des matières grasses, les caractéristiques du système peuvent être largement modifiées.

Pour éviter cet inconvénient, il est proposé de prélubrifier légèrement et de façon contrôlée les surfaces de friction et de régler le système dans cet état de sorte qu'une souillure ultérieure de ces surfaces n'altère pas de façon sensible la réponse du système amortisseur.

Sur la figure 18 :

- la courbe X représente l'effort de friction du patin sur la tige (chargé par les rondelles 500),
- la courbe Y représente l'effort résistant de l'appui élastique 800,
- le point A représente le premier état d'équilibre des rondelles 500,
- le point B représente le second état d'équilibre des rondelles 500,
- le point C représente le poind d'équilibre du système amortisseur, et
- l'excursion Z représente l'état de déformation de flambage des rondelles 500.

**Revendications**

1. Dispositif amortisseur du type comprenant :

- deux ensembles (100, 300) susceptibles de déplacement relatif guidé, l'un lié à une référence, l'autre mobile par rapport à cette référence.
- des moyens (113) définissant une liaison d'entraînement entre ledit autre ensemble et un système à amortir,

- un patin (400) apte à reposer sur un premier des ensembles, et
- des moyens de commande (500) comprenant des moyens élastiques intercalés entre le patin (400) et le second ensemble, lesquels moyens de commande sont adaptés pour exercer un effort sur le patin (400), tendant à appliquer ledit patin contre le premier ensemble, lors d'une phase active de la sollicitation du dispositif amortisseur correspondant à un premier sens de déplacement relatif entre les deux ensembles (100, 300) et pour réduire l'effort exercé par le patin (400) lors d'une phase passive de la sollicitation du dispositif amortisseur correspondant à un second sens de déplacement relatif entre les deux ensembles (100, 300),

caractérisé par le fait que les moyens de commande comprennent des moyens élastiques (500) sous forme de poutres rectilignes au repos, reposant par leurs extrémités, respectivement sur le patin et sur le second ensemble, et travaillant au flambage (510).

2. Dispositif selon la revendication 1, caractérisé par le fait que les moyens de commande (500) comprennent des moyens élastiques chargés lors du rattrapage au moins partiel d'un jeu J existant entre le patin (400) et le second ensemble.

3. Dispositif selon l'une des revendications 1 ou 2, caractérisé par le fait qu'il comprend en outre un limiteur d'effort (140).

4. Dispositif selon l'une des revendications 1 à 3 caractérisé par le fait que les moyens de commande (500) comprennent au moins une rondelle élastique.

5. Dispositif selon l'une des revendications 1 à 4 caractérisé par le fait que les moyens de commande (500) comprennent au moins une rondelle en étoile formée d'un cône pourvu de découpes radiales débouchant alternativement sur sa périphérie intérieure et sur sa périphérie extérieure.

6. Dispositif selon l'une des revendications 1 à 5 caractérisé par le fait que les moyens de commande (500) comprennent plusieurs rondelles élastiques empilées.

7. Dispositif selon l'une des revendications 1 à 5 caractérisé par le fait que les moyens de commande (500) comprennent une pièce en élastomère (530).

8. Dispositif selon la revendication 3 caractérisé par le fait que le limiteur d'effort comprend des organes élastiques (440).

9. Dispositif selon la revendication 8 caractérisé par le fait que le limiteur d'effort (140) comprend au moins une rondelle du type Belleville.

10. Dispositif selon l'une des revendicaiions 1 à 9 caractérisé par le fait que les deux ensembles (100, 300) sont susceptibles de translation relative.

11. Dispositif selon l'une des revendications 1 à 10 caractérisé par le fait que le patin (400) et l'ensemble (100, 300) placés en regard présentent un diamètre constant sur leurs longueurs au niveau des surfaces de friction.

12. Dispositif selon l'une des revendications 1 à 11 caractérisé par le fait que l'un au moins du patin (400) et de l'ensemble (100, 300) placé en regard comprend un diamètre variable sur sa longueur au niveau des surfaces de friction.

13. Dispositif selon l'une des revendications 1 à 12 caractérisé par le fait que les surfaces de friction prévues sur le patin (400) et sur l'ensemble (100, 300) placé en regard présentent un coefficient de frottement constant sur leur longueur.

14. Dispositif selon l'une des revendications 1 à 12 caractérisé par le fait que l'une au moins des surfaces de friction prévues sur le patin (400) ou sur l'ensemble (100, 300) placé en regard présente un coefficient de frottement variable sur sa longueur.

15. Dispositif selon l'une des revendications 1 à 14 caractérisé par le fait que le patin (400) est formé d'une bague fendue.

16. Dispositif selon l'une des revendications 1 à 15 caractérisé par le fait que le patin (400) porte l'un des ensembles (100) sur sa surface externe.

17. Dispositif selon la revendication 16 caractérisé par le fait que ledit ensemble (100) est immobilisé sur la surface externe du patin (400) grâce à deux joncs élastiques (600, 601).

18. Dispositif selon l'une des revendications 16 ou 17 caractérisé par le fait que le patin (400) est formé d'un élément cylindrique comportant une concavité annulaire interne (410).

19. Dispositif selon l'une des revendications 1 à 18 caractérisé par le fait que le patin (400) est placé sur la surface externe de l'un des éléments (100, 300).

20. Dispositif selon l'une des revendications 1 à 18 caractérisé par le fait que le patin (400) est placé sur la surface interne de l'un des éléments (100, 300).

21. Dispositif selon l'une des revendications 1 à 19 caractérisé par le fait qu'il est prévu deux patins (400, 430) venant respectivement en appui l'un sur la surface interne de l'un des ensembles (300), l'autre sur la surface externe de l'autre ensemble (100), et qu'il est prévu des moyens de commande (500) entre les deux patins (400, 430).

22. Dispositif selon l'une des revendications 1 à 21 caractérisé par le fait qu'il est prévu plusieurs patins (400) juxtaposés axialement et associés à des moyens de commande (500) spécifiques.

23. Dispositif selon l'une des revendications 1 à 22 caractérisé par le fait qu'il est prévu des moyens de rappel (700) sollicitant les deux ensembles (100, 300) en position de repos.

24. Dispositif selon la revendication 23 caractérisé par le fait que les moyens de rappel (700) sont formés d'un ressort.

25. Dispositif selon la revendication 23 caractérisé par le fait que les moyens de rappel (700) sont formés par la compression d'un volume d'air.

26. Dispositif selon la revendication 25 caractérisé par le fait que les deux ensembles (100, 300) délimitent une chambre étanche interne (332).

27. Dispositif selon l'une des revendications 1 à 26 caractérisé par le fait que le ressort de rappel (700) travaille à compression.

28. Dispositif selon l'une des revendications 1 à 26 caractérisé par le fait que le ressort de rappel (700) travaille à la traction.

29. Dispositif selon l'une des revendications 1 à 9 caractérisé par le fait que les deux ensembles (100, 300) sont susceptibles de rotation relative.

30. Dispositif selon l'une des revendications 1 à 29, caractérisé par le fait qu'il comprend des moyens de mise en précontrainte qui chargent les moyens elastiques (500) agissant sur le patin (400) par rattrapage au moins partiel du jeu J existant entre le patin (400) et le second ensemble, avant tout déplacement relatif entre les deux ensembles (100, 300).

31. Dispositif selon l'une des revendications 1 à 30, caractérisé par le fait qu'il comprend en outre un appui élastique (800) qui limite et contrôle le déplacement du patin (400) par rapport au second ensemble (100).

32. Dispositif selon la revendication 31, caractérisé par le fait que l'appui élastique (800) est composé de rondelles de type Belleville.

33. Dispositif selon l'une de revendications 31 ou 32, caractérisé par la fait que le jeu axial défini entre le patin (400) et le second ensemble (100), ainsi que la déformation de l'appui élastique (800) autorisent un basculement de rondelles (500) composant les moyens de commande élastiques, entre deux états stables, lors de la phase de chargement de l'amortisseur.

34. Dispositif selon l'une des revendications 31 à 33, caractérisé par le fait que l'appui élastique (800) est adapté pour contrôler l'effort de friction afin de stabiliser la réponse en effort de l'amortisseur.

35. Dispositif selon l'une des revendications 31 à 34, caractérisé par le fait qu'il possède deux positions d'équilibre, l'une favorisant l'arcboutement du dispositif, l'autre favorisant le relachement du dispositif.

36. Dispositif selon l'une des revendications 31 à 35, caractérisé par le fait que l'appui élastique (800) est adapté pour opérer le retour automatique en position d'attente de rondelles (500) composant les moyens de commande élastiques, dans leur premier état d'équilibre.

37. Application du dispositif amortisseur conforme à l'une des revendications 1 à 36 à l'amortissement de l'effort exercé par le recul d'un tube d'arme.

38. Application selon la revendication 37, caractérisée par le fait que la référence est formée par une épaulière, des poignées ou un affût tandis que le système à amortir est formé par un tube d'arme coulissant par rapport à la référence fixe.

**Patentansprüche**

1. Dämpfungsvorrichtung von dem Typ, welcher aufweist:

   - zwei Einheiten (100, 300), die eine geführte relative Verschiebung durchführen können, wobei eine mit einer Referenz verbunden ist und die andere bezüglich dieser Referenz beweglich ist,
   - Mittel (113), welche eine Mitnahmeverbindung zwischen der anderen Einheit und einem zu dämpfenden System bestimmen,
   - einen Gleiter (400), der auf einer ersten der Einheiten aufliegen kann, und

- Steuermittel (500) mit federnden Mitteln, die zwischen dem Gleiter (400) und der zweiten Einheit eingesetzt sind, wobei die Steuermittel ausgelegt sind, um auf den Gleiter (400) eine Kraft auszuüben, die dazu dient während einer aktiven Phase der Beaufschlagung der Dämpfungsvorrichtung, die einer ersten Relativverschiebungsrichtung zwischen den beiden Einheiten (100, 300) entspricht, den Gleiter gegen die erste Einheit zudrücken, und um die durch den Gleiter (400) ausgeübte Kraft während einer passiven Phase der Beaufschlagung der Dämpfungsvorrichtung, die einer zweiten Relativerschiebungsrichtung zwischen den beiden Einheiten (100, 300) entspricht, zu verringern,

dadurch gekennzeichnet, daß die Steuermittel (500) federnde Mittel in Form von im Ruhezustand geradlinigen Trägern aufweisen, die mit ihren Enden jeweils auf dem Gleiter und auf der zweiten Einheit aufliegen und mit Biegewirkung arbeiten.

2. Vorrichtung nach Anspruch 1, dadurch gekennzeichnet, daß die Steuermittel (500) elastische Mittel aufweisen, die während der zumindest teilweisen Nacheinstellung eines zwischen dem Gleiter (400) und der zweiten Einheit bestehenden Spiels J belastet sind.

3. Vorrichtung nach einem der Ansprüche 1 oder 2, dadurch gekennzeichnet, daß sie außerdem einen Kraftbegrenzer (140) aufweist.

4. Vorrichtung nach einem der Ansprüche 1 bis 3, dadurch gekennzeichnet, daß die Steuermittel (500) mindestens eine Federscheibe aufweisen.

5. Vorrichtung nach einem der Ansprüche 1 bis 4, dadurch gekennzeichnet, daß die Steuermittel (500) mindestens eine aus einem Kegel gebildete sternförmige Scheibe aufweisen, die mit radialen Ausschnitten versehen ist, welche abwechselnd an ihren inneren Rand und ihren äußeren Rand münden.

6. Vorrichtung nach einem der Ansprüche 1 bis 5, dadurch gekennzeichnet, daß die Steuermittel (500) mehrere gestapelte Federscheiben aufweisen.

7. Vorrichtung nach einem der Ansprüche 1 bis 5, dadurch gekennzeichnet, daß die Steuermittel (500) ein Elastomerstück (530) aufweisen.

8. Vorrichtung nach Anspruch 3, dadurch gekennzeichnet, daß der Kraftbegrenzer federnde Elemente (440) aufweist.

9. Vorrichtung nach Anspruch 8, dadurch gekennzeichnet, daß der Kraftbegrenzer (140) mindestens eine Belleville-Federscheibe aufweist.

10. Vorrichtung nach einem der Ansprüche 1 bis 9, dadurch gekennzeichnet, daß die beiden Einheiten (100, 300) eine relative Translation durchführen können.

11. Vorrichtung nach einem der Ansprüche 1 bis 10, dadurch gekennzeichnet, daß der Gleiter (400) und die gegenüberliegend angeordnete Einheit (100, 300) einen über ihre Längen bei den Reibungsflächen konstanten Durchmesser haben.

12. Vorrichtung nach einem der Ansprüche 1 bis 11, dadurch gekennzeichnet, daß zumindest der Gleiter (400) oder die gegenüberliegend angeordnete Einheit (100, 300) einen über seine bzw. ihre Länge bei den Reibungsflächen variablen Durchmesser aufweist.

13. Vorrichtung nach einem der Ansprüche 1 bis 12, dadurch gekennzeichnet, daß die auf dem Gleiter (400) und auf der gegenüberliegend angeordneten Einheit (100, 300) vorgesehenen Reibungsflächen einen über ihre Länge konstanten Reibungskoeffizienten haben.

14. Vorrichtung nach einem der Ansprüche 1 bis 12, dadurch gekennzeichnet, daß mindestens eine der auf dem Gleiter (400) oder auf der gegenüberliegend angeordneten Einheit (100, 300) vorgesehenen Reibungsflächen einen über ihre Länge variablen Reibungskoeffizienten haben.

15. Vorrichtung nach einem der Ansprüche 1 bis 14, dadurch gekennzeichnet, daß der Gleiter (400) aus einem geschlitzten Ring gebildet ist.

16. Vorrichtung nach einem der Ansprüche 1 bis 15, dadurch gekennzeichnet, daß der Gleiter (400) eine der Einheiten (100) auf seiner äußeren Fläche trägt.

17. Vorrichtung nach einem der Ansprüche 1 bis 16, dadurch gekennzeichnet, daß die Einheit (100) auf der äußeren Fläche des Gleiter (400) mittels zweier Federringe (600, 601) festgestellt ist.

18. Vorrichtung nach einem der Ansprüche 16 oder 17, dadurch gekennzeichnet, daß der Gleiter (400) aus einem zylindrischen Element gebildet ist, das eine innere ringförmige Konkavität (410) aufweist.

19. Vorrichtung nach einem der Ansprüche 1 bis 18, dadurch gekennzeichnet, daß der Gleiter (400) auf der äußeren Oberfläche eines der Elemente (100, 300) angeordnet ist.

**20.** Vorrichtung nach einem der Ansprüche 1 bis 18, dadurch gekennzeichnet, daß der Gleiter (400) auf der inneren Oberfläche eines der Elemente (100, 300) angeordnet ist.

**21.** Vorrichtung nach einem der Ansprüche 1 bis 19, dadurch gekennzeichnet, daß zwei Gleiter (400, 430) vorgesehen sind, von denen der eine auf der inneren Oberfläche einer der Einheiten (300) anliegt und der andere auf der äußeren Oberfläche der anderen Einheit (100) anliegt, und daß Steuermittel (500) zwischen den beiden Gleiter (400, 430) vorgesehen sind.

**22.** Vorrichtung nach einem der Ansprüche 1 bis 21, dadurch gekennzeichnet, daß mehrere axial nebeneinander angeordnete und besonderen Steuermitteln (500) zugeordnete Gleiter (400) vorgesehen sind.

**23.** Vorrichtung nach einem der Ansprüche 1 bis 22, dadurch gekennzeichnet, daß Rückholmittel (700) vorgesehen sind, welche die beiden Einheiten (100, 300) in die Ruhestellung drücken.

**24.** Vorrichtung nach Anspruch 23, dadurch gekennzeichnet, daß die Rückholmittel (700) durch eine Feder gebildet sind.

**25.** Vorrichtung nach Anspruch 23, dadurch gekennzeichnet, daß die Rückholmittel (700) durch die Kompression eines Luftvolumens gebildet sind.

**26.** Vorrichtung nach Anspruch 25, dadurch gekennzeichnet, daß die beiden Einheiten (100, 300) eine innere dichte Kammer (332) begrenzen.

**27.** Vorrichtung nach einem der Ansprüche 1 bis 26, dadurch gekennzeichnet, daß die Rückholfeder (700) durch Druck arbeitet.

**28.** Vorrichtung nach einem der Ansprüche 1 bis 26, dadurch gekennzeichnet, daß die Rückholfeder (700) durch Zug arbeitet.

**29.** Vorrichtung nach einem der Ansprüche 1 bis 9, dadurch gekennzeichnet, daß die beiden Einheiten (100, 300) eine relative Drehung durchführen können.

**30.** Vorrichtung nach einem der Ansprüche 1 bis 29, dadurch gekennzeichnet, daß sie Mittel zur Vorspannung aufweist, welche die auf den Gleiter (400) einwirkenden federnden Mittel (500) durch eine zumindest teilweise Nacheinstellung des zwischen dem Gleiter (400) und der zweiten Einheit bestehenden Spiels J vor jeglicher relativen Verschiebung zwischen den beiden Einheiten (100, 300) belasten.

**31.** Vorrichtung nach einem der Ansprüche 1 bis 30, dadurch gekennzeichnet, daß sie außerdem eine federnde Auflage (800) aufweist, welche die Verschiebung des Gleiters (400) bezüglich der zweiten Einheit (100) begrenzt.

**32.** Vorrichtung nach Anspruch 31, dadurch gekennzeichnet, daß die federnde Auflage (800) aus Belleville-Federscheiben besteht.

**33.** Vorrichtung nach einem der Ansprüche 31 oder 32, dadurch gekennzeichnet, daß das zwischen dem Gleiter (400) und der zweiten Einheit (100) definierte axiale Spiel sowie die Verformung der federnden Auflage (800) ein Kippen von Federscheiben (500), welche die federnden Steuermittel bilden, zwischen zwei stabilen Zuständen während der Belastungsphase der Dämpfungsvorrichtung gestatten.

**34.** Vorrichtung nach einem der Ansprüche 31 bis 33, dadurch gekennzeichnet, daß die federnde Auflage (800) ausgelegt ist, um die Reibungskraft zum Stabilisieren der Kraftantwort der Dämpfungsvorrichtung zu steuern.

**35.** Vorrichtung nach einem der Ansprüche 31 bis 34, dadurch gekennzeichnet, daß sie zwei Gleichgewichtspositionen besitzt, von denen eine das Versteifen der Vorrichtung und die andere das Lockern der Vorrichtung begünstigt.

**36.** Vorrichtung nach einem der Ansprüche 31 bis 35, dadurch gekennzeichnet, daß die federnde Auflage (800) ausgelegt ist, um in ihrem ersten Gleichgewichtszustand die automatische Rückkehr von Federscheiben (500), welche die federnden Steuermittel bilden, in die Bereitschaftsstellung zu bewirken.

**37.** Verwendung der Dämpfungsvorrichtung gemäß einem der Ansprüche 1 bis 36 zur Dämpfung der Kraft, die durch den Rückstoß eines Waffenrohrs ausgeübt wird.

**38.** Verwendung nach Anspruch 37, dadurch gekennzeichnet, daß die Referenz durch eine Schulterstütze, Griffe oder ein Gestell gebildet ist, während das zu dämpfende System durch ein bezüglich der feststehenden Referenz gleitendes Waffenrohr gebildet ist.

**Claims**

**1.** A damper device of the type comprising:

two assemblies (100, 300) suitable for guided relative displacement, one being tied to a reference and the other being movable relative to said reference;

means (113) defining a driving connection between said other assembly and the system to be damped;

a shoe (400) suitable for resting against a first one of the assemblies; and

control means (500) including resilient means interposed between the shoe (400) and the second one of the assemblies, said control means being adapted to exert a force on the shoe (400) tending to urge said shoe against the first assembly during an active stage of damper device loading corresponding to a first direction of relative displacement between the two assemblies (100, 300), and to reduce the force exerted by the shoe (400) during a passive stage of damper device loading corresponding to a second direction of relative displacement between the two assemblies (100, 300);

the damper device being characterized by the fact that the control means comprise resilient means (500) in the shape of beams that are rectilinear at rest, having their ends resting respectively on the shoe and on the second assembly, and that work in buckling (510).

2. A device according to claim 1, characterized by the fact that the control means (500) comprise resilient means that are loaded while taking up at least a portion of clearance (J) that exists between the shoe (400) and the second assembly.

3. A device according to claim 1 or 2, characterized by the fact that it further includes a force-limiter (140).

4. A device according to any one of claims 1 to 3, characterized by the fact that the control means (500) comprise at least one spring washer.

5. A device according to any one of claims 1 to 4, characterized by the fact that the control means (500) comprise at least one star-shaped washer formed into a cone and provided with radial cutouts that open to its periphery, alternately on the inside and on the outside.

6. A device according to any one of claims 1 to 5, characterized by the fact that the control means (500) comprise a plurality of stacked spring washers.

7. A device according to any one of claims 1 to 5, characterized by the fact that the control means (500) comprise a piece of elastomer (530).

8. A device according to claim 3, characterized by the fact that the force-limiter comprises resilient members (440).

9. A device according to claim 8, characterized by the fact that the force-limiter (140) comprises at least one Belleville type spring washer.

10. A device according to any one of claims 1 to 9, characterized by the fact that the two assemblies (100, 300) are suitable for relative translation.

11. A device according to any one of claims 1 to 10, characterized by the fact that the shoe (400) and the facing assembly (100, 300) are of constant diameter along the lengths of their friction surfaces.

12. A device according to any one of claims 1 to 11, characterized by the fact that at least one of the shoe (400) and the facing assembly (100, 300) is of varying diameter along the length of its friction surface.

13. A device according to any one of claims 1 to 12, characterized by the fact that the friction surfaces provided on the shoe (400) and on the facing assembly (100, 300) have a coefficient of friction that is constant along the lengths thereof.

14. A device according to any one of claims 1 to 12, characterized by the fact that at least one of the friction surfaces provided on the shoe (400) and on the facing assembly (100, 300) has a coefficient of friction that varies along its length.

15. A device according to any one of claims 1 to 14, characterized by the fact that the shoe (400) is formed by a split ring.

16. A device according to any one of claims 1 to 15, characterized by the fact that the shoe (400) carries one of the assemblies (100) on its outer surface.

17. A device according to claim 16, characterized by the fact that said assembly (100) is held on the outer surface of the shoe (400) by two spring clips (600, 601).

18. A device according to claim 16 or 17, characterized by the fact that the shoe (400) is formed by a cylindrical element having an internal annular cavity (410).

19. A device according to any one of claims 1 to 18, characterized by the fact that the shoe (400) is placed on the outside surface of one of the elements (100, 300).

20. A device according to any one of claims 1 to 18, characterized by the fact that the shoe (400) is placed on the inside surface of one of the elements (100, 300).

21. A device according to any one of claims 1 to 19, characterized by the fact that two shoes (400, 430) are provided one bearing against the inside surface of one of the assemblies (300) while the other bears against the outside surface of the other assembly (100), and that the control means (500) are provided between the two shoes (400, 430).

22. A device according to any one of claims 1 to 21, characterized by the fact that a plurality of shoes (400) are provided in axial juxtaposition and in association with respective control means (500).

23. A device according to any one of claims 1 to 22, characterized by the fact that return means (700) are provided urging the two assemblies (100, 300) towards a rest position.

24. A device according to claim 23, characterized by the fact that the return means (700) are formed by a spring.

25. A device according to claim 23, characterized by the fact that the return means (700) are formed by compressing a volume of air.

26. A device according to claim 25, characterized by the fact that the two assemblies (100, 300) define an internal airtight chamber (332).

27. A device according to any one of claims 1 to 26, characterized by the fact that the return spring (700) operates in compression.

28. A device according to any one of claims 1 to 26, characterized by the fact that the return spring (700) operates in traction.

29. A device according to any one of claims 1 to 9, characterized by the fact that the two assemblies (100, 300) are suitable for relative rotation.

30. A device according to any one of claims 1 to 29, characterized by the fact that it includes prestress means which load the resilient means (500) acting on the shoe (400) by taking up at least a part of the clearance (J) that exists between the shoe (400) and the second assembly, prior to any relative displacement between the two assemblies (100, 300).

31. A device according to any one of claims 1 to 30, characterized by the fact that it further includes a resilient abutment (800) which limits and controls displacement of the shoe (400) relative to the second assembly (100).

32. A device according to claim 31, characterized by the fact that the resilient abutment (800) is made up of Belleville type spring washers.

33. A device according to claim 31 or 32, characterized by the fact that the axial clearance defined between the shoe (400) and the second assembly (100), together with the deformation of the resilient abutment (800) enable the washers (500) constituting the resilient control means to switch between two stable states during the damper loading stage.

34. A device according to any one of claims 31 to 33, characterized by the fact that the resilient abutment (800) is adapted to control friction force so as to stabilize the force response of the damper.

35. A device according to any one of claims 31 to 34, characterized by the fact that it possesses two equilibrium positions, one encouraging stiffening of the device, and the other encouraging relaxing of the device.

36. A device according to any one of claims 31 to 35, characterized by the fact that the resilient abutment (800) is adapted to cause the washers (500) constituting the resilient control means to return automatically into their first equilibrium state.

37. An application of the damper device according to any one of claims 1 to 36 to damping the force exerted by the recoil of the barrel of a weapon.

38. An application according to claim 37, characterized by the fact that the reference is constituted by a gun stock, grip, or carriage, while the system to be damped is formed by a gun barrel that is slidable relative to the stationary reference.

EP 0 666 967 B1

# FIG.1

# FIG.2

16

FIG.3

FIG.4

FIG.5

# FIG.6

# FIG.7

# FIG.8

FIG.9

FIG.10

FIG.11

FIG.12

FIG.13

FIG.14

FIG.15

FIG.16

FIG.17

FIG.18